# EUROPEAN PATENT APPLICATION

(11) **EP 4 826 777 A1**
(43) Date of publication of application: **21.10.2026**
(21) Application number: 24904279.7
(22) Date of filing: 13.12.2024
(51) Int. Cl.: H01M 4/134, H01M 4/66, H01M 4/1395

(54) **LITHIUM METAL ELECTRODE FOR LITHIUM SECONDARY BATTERY, AND METHOD FOR MANUFACTURING SAME**

(30) Priority: 15.12.2023 KR 20230183700
(71) Applicant: POSCO Holdings Inc., Pohang-si, Gyeongsangbuk-do 37859 (KR)
(72) Inventor: BAE, Hongyeul, Pohang-si, Gyeongsangbuk-do 37859 (KR); KIM, Jin Hong, Pohang-si, Gyeongsangbuk-do 37859 (KR); LEE, Garam, Pohang-si, Gyeongsangbuk-do 37859 (KR)
(74) Representative: Pfenning, Meinig & Partner mbB
(86) International application number: PCT/KR2024/020316
(87) International publication number: WO 2025/127714

(57) **Abstract**

The present invention relates to a lithium metal electrode and a method for manufacturing the same. The lithium metal electrode of the present invention includes a current collector, a metal layer positioned on at least one surface of the current collector and including a lithium alloy, and a protective layer disposed on the metal layer and including a carbon-based material, wherein at least one of a nitrogen-based alloy and a magnesium-based alloy is included in at least one region between the metal layer and the protective layer and inside the protective layer.

## Description

### [TECHNICAL FIELD]

The present invention relates to a lithium secondary battery, and more particularly, to a lithium metal electrode for a lithium secondary battery and a method for manufacturing the same.

### [BACKGROUND ART]

In order to reduce the cost and increase the energy density of secondary batteries, it has become essential to use a lithium metal electrode as a negative electrode of a lithium secondary battery. Specifically, all-solid-state batteries have recently attracted attention as next-generation batteries for high energy density applications such as electric vehicles (EVs).

Since all-solid-state batteries do not use a liquid electrolyte, they have advantages in various aspects, such as excellent stability, high-voltage operation, improved energy density of a battery pack due to reduction of cooling- and safety-related auxiliary materials, and operability over a wide temperature range. In order to substantially realize high energy density in such an all-solid-state battery, a thick graphite-based negative electrode material having low capacity should be replaced with lithium, which is thin and has high capacity, and, in view of economic feasibility and energy density, a thin-film lithium metal electrode having a thickness of substantially 10 µm to 20 µm is required.

In general, in the case of a lithium metal electrode, there is difficulty in a technology for thinly manufacturing lithium metal through a commercialized process, and dendrite growth caused by non-uniform current density and electrochemical reactions during charging and discharging of a secondary battery has been a problem. This may induce continuous side reactions with an electrolyte and may lead to an internal short circuit in which a negative electrode and a positive electrode come into contact with each other. Such dendrite growth may also cause significant problems in terms of low lifespan characteristics and stability.

Various methods have been proposed for suppressing the dendrite growth and increasing lifespan, but it is still difficult to simultaneously implement high energy density through thinning of lithium and sufficient lifespan characteristics. As methods for suppressing the dendrite growth, various methods have been proposed, such as using amorphous carbon alone as a protective layer on a lithium metal electrode or using a composite material with an expensive lithiophilic metal, but there is a problem in that a sufficient lithium stacking rate and charge/discharge lifespan characteristics cannot be obtained.

### [DETAILED DESCRIPTION OF THE INVENTION]

### [Technical Problem]

A lithium metal electrode for a lithium secondary battery according to an embodiment of the present invention is intended to provide a lithium secondary battery in which lithium ion conductivity is improved to increase a lithium stacking rate and charge/discharge lifespan characteristics are improved.

A method for manufacturing a lithium metal electrode for a lithium secondary battery according to another embodiment of the present invention is intended to provide a method for manufacturing a lithium metal electrode for a lithium secondary battery having the above-described advantages.

### [Technical Solution]

A lithium metal electrode according to an embodiment of the present invention may include a current collector, a metal layer positioned on at least one surface of the current collector and including a lithium alloy, and a protective layer disposed on the metal layer and including a carbon-based material, and may include an alloy layer including at least one of a nitrogen-based alloy and a magnesium-based alloy in at least one region between the metal layer and the protective layer and inside the protective layer. In an embodiment, the lithium metal electrode may have at least one peak value among 21° to 25°, 26° to 30°, 35° to 39°, 45° to 47°, 48° to 51°, and 54° to 56° in XRD peak values.

In an embodiment, the XRD peak values may satisfy the following Equation 1. <Equation 1> $3 \leq second peak value / first peak value \times 100 \left(%\right) \leq 10$

In Equation 1, the first peak value is an intensity value at 44° to 46°, and the second peak value is an intensity value at 26° to 30°.

In an embodiment, the XRD peak values may satisfy the following Equation 2. <Equation 2> $3 \leq third peak value / first peak value \times 100 \left(%\right) \leq 10$

In Equation 2, the first peak value is an intensity value at 44° to 46°, and the third peak value is an intensity value at 35° to 39°.

In an embodiment, the XRD peak values may satisfy the following Equation 3. <Equation 3> $3 \leq \left(second peak value+third peak value\right) / first peak value \times 100 \left(%\right) \leq 20$

In Equation 3, the first peak value is an intensity value at 44° to 46°, the second peak value is an intensity value at 26° to 30°, and the third peak value is an intensity value at 35° to 39°.

In an embodiment, the lithium metal electrode may include a coating layer disposed on the protective layer. In an embodiment, the protective layer may include a carbon-based material and a metal fluoride or a metal nitride.

A method for manufacturing a lithium metal electrode according to another embodiment of the present invention may include preparing a current collector, forming a coating layer on at least one surface of the current collector using a coating composition including a lithiophilic component, and forming a protective layer by coating a slurry on a surface of the coating layer, wherein the slurry may include a carbon-based material and at least one of a metal fluoride and a metal nitride. In an embodiment, after forming the protective layer, the method may include placing the current collector on which the protective layer is formed in a plating solution and then placing a lithium supply source at a predetermined distance from the protective layer, and applying a current between the current collector and the lithium supply source to form a metal layer including a lithium alloy in which metal particles included in the protective layer and lithium precipitated from the lithium supply source are alloyed.

In an embodiment, the metal fluoride or the metal nitride may include at least one of MgF₂, Mg₃N₂, AgF, and Ag₃N. In an embodiment, before applying a current between the current collector and the lithium supply source, the protective layer may have a peak value between 16° and 18° in XRD peak values.

In an embodiment, after applying a current between the current collector and the lithium supply source, the metal layer may include a nitrogen-based or magnesium-based alloy. In an embodiment, the slurry may include, based on 100 wt% of a total amount of amorphous carbon and a metal material including a metal fluoride or a metal nitride, the amorphous carbon in an amount of 70 wt% to 95 wt%.

In an embodiment, the slurry may include amorphous carbon, a metal fluoride, and a metal nitride, and, based on 100 wt% of a total amount of the amorphous carbon, the metal fluoride, and the metal nitride, a total amount of the metal fluoride and the metal nitride may be 8 wt% to 30 wt%. In an embodiment, in the step of applying a current between the current collector and the lithium supply source to form a metal layer including a lithium alloy in which the metal particles and lithium precipitated from the lithium supply source are alloyed, the method includes electrodepositing at a maximum current density in a range of 6 mA/cm² to 12 mA/cm².

### [Advantageous Effects]

A lithium metal electrode for a lithium secondary battery according to an embodiment of the present invention is intended to provide a lithium secondary battery in which lithium ion conductivity is improved to increase a lithium stacking rate and charge/discharge lifespan characteristics are improved, by mixing amorphous carbon with a metal fluoride or a metal nitride in a protective layer and forming an alloy with lithium metal or an SEI layer favorable for charging and discharging during an electrodeposition process.

A method for manufacturing a lithium metal electrode for a lithium secondary battery according to another embodiment of the present invention is intended to provide a method for manufacturing a lithium metal electrode having the above-described advantages.

### [BRIEF DESCRIPTION OF THE DRAWINGS]

FIGS. 1A and 1B show lithium metal electrodes manufactured according to an embodiment.
FIG. 2 is a schematic view of a method for manufacturing a lithium metal electrode of the present invention.
FIGS. 3A and 3B show surface and cross-sectional microstructures when a protective layer is disposed on a current collector.
FIGS. 4A and 4B show surface and cross-sectional microstructures when a protective layer is disposed on a current collector.
FIGS. 5A and 5B show electrodeposition appearances according to a maximum current density in electrodeposition processes according to an Example and a Comparative Example.
FIGS. 6A to 6C show XRD phase analysis results before and after lithium electrodeposition of protective layers according to Examples and Comparative Examples of the present invention.

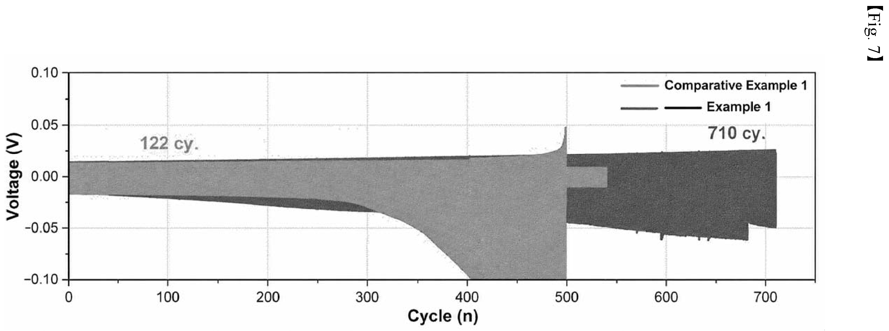

FIG. 7 shows cell lifespan evaluation of all-solid-state batteries using Examples and Comparative Examples of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

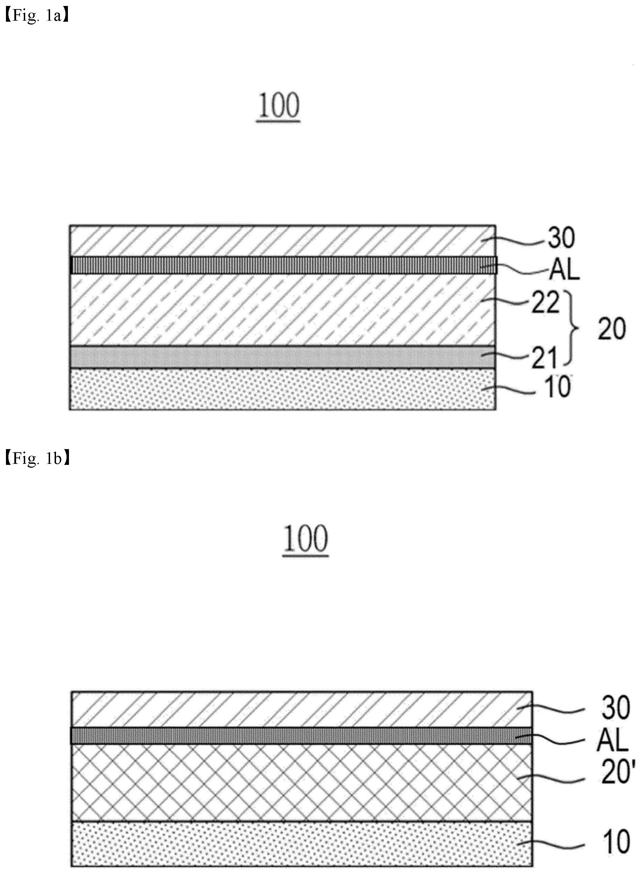

FIGS. 1A and 1B show a lithium metal electrode 100 manufactured according to an embodiment.

Referring to FIG. 1A, the lithium metal electrode 100 according to an embodiment includes a current collector 10, a metal layer 20 disposed on at least one surface of the current collector 10, and a protective layer 30 disposed on the metal layer 20.

The current collector 10 may be a member for electrical connection in a lithium secondary battery. The current collector 10 may have a form of a foil, but is not limited thereto, and may have, for example, a form of a mesh, a foam, a rod, a wire, or a sheet woven from wires or fibers.

As the current collector 10, a material having electrical conductivity and having limited reactivity with lithium may be used. Specifically, the material of the current collector 10 may be, for example, one of copper, nickel, titanium, stainless steel, gold, platinum, silver, tantalum, ruthenium, and alloys thereof, carbon, a conductive polymer, and a composite fiber in which a conductive layer is coated on a non-conductive polymer, or a combination thereof.

In an embodiment, the current collector 10 may have a thickness of 1 µm to 50 µm. When the current collector 10 is excessively thick, there is a problem in that the weight of the battery increases and energy density of the battery decreases. When the current collector 10 is excessively thin, there is a risk of overheating damage during high-current operation, and the current collector may be damaged by tension during a battery manufacturing process.

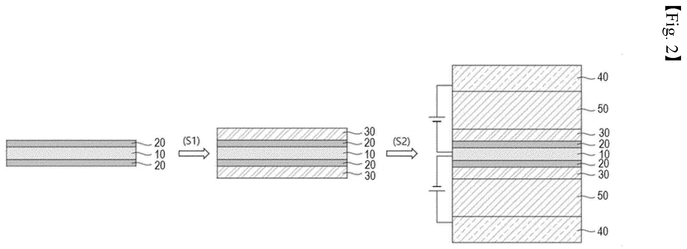

The metal layer 20 is positioned on the current collector 10 and may include a lithium alloy layer 21 including a lithium alloy and a lithium metal layer 22 positioned on the lithium alloy layer 21. The lithium alloy layer 21 may be a layer including a lithium alloy in which a lithiophilic component included in the metal layer 20 on the current collector 10 and lithium precipitated from a lithium supply source 40 of FIG. 2 are alloyed by applying a current between the current collector 10 and the lithium supply source 40.

When an electrodeposition process is performed by applying a high current in order to increase an electrodeposition rate when forming the metal layer 20, there is a problem in that performance of a lithium secondary battery deteriorates. However, when the metal layer 12 is formed in a structure including the lithium alloy layer 21 containing a lithium component as in the present embodiment, excessive generation of fine lithium particles or destruction of the protective layer 30 positioned on the lithium metal layer 22 already generated in the electrodeposition process can be prevented even if the electrodeposition process is performed by applying a high current.

Specifically, since the metal layer 20 of an embodiment includes the lithium alloy layer 21 containing a lithium component, when the lithium metal layer 22 is formed on the lithium alloy layer 21 by applying a high current in the electrodeposition process, initially generated lithium particles may be induced to grow well, thereby forming particles having a coarse structure, and at the same time the lithium metal layer 22, and consequently the metal layer 20, may have a uniform surface.

Accordingly, performance of a secondary battery to which the lithium metal electrode according to the present embodiment is applied, specifically charge/discharge characteristics, can be remarkably improved. In addition, since a lithium metal electrode for a secondary battery having high performance can be manufactured even when an electrodeposition process is performed at a high rate by applying a high current, productivity of the lithium metal electrode for a secondary battery can also be remarkably improved.

In the present embodiment, the lithium alloy layer 21 includes a lithiophilic metal. The lithiophilic metal may be, for example, at least one selected from the group consisting of In, Ag, Sn, Zn, Si, Al, and Bi. When the lithium alloy layer 21 includes the lithiophilic metal as described above, electrons can be smoothly supplied from the current collector because the lithium alloy layer includes a lithiophilic metal having high electronic conductivity, and lithium ions are reduced, thereby providing an advantage in that electrodeposition of the lithium metal layer is easily performed. The metal layer 20 serves to help lithium be more effectively precipitated under the protective layer 30 during a charging process of a battery.

In an embodiment, the metal layer 20 may have a thickness of 1 µm to 100 µm, and more specifically 5 µm to 30 µm. When the metal layer 20 is excessively thick, when the lithium metal electrode of the present embodiment is applied to a secondary battery, there is a problem in that the weight and volume of the battery increase and energy density decreases. In addition, since time and cost of an electrodeposition process increase in proportion to thickness when forming the metal layer 20, the thickness of the metal layer 20 is preferably 100 µm or less.

When the metal layer 20 is excessively thin, when the lithium metal electrode of the present embodiment is applied to a secondary battery, there is a problem in that charge/discharge lifespan of the battery deteriorates. Specifically, during charging and discharging of the battery, lithium in the battery is gradually consumed due to side reactions between lithium included in the negative electrode active material layer, that is, the metal layer of the present invention, and the electrolyte solution, whereby battery capacity decreases, and since the retained amount of lithium capable of replenishing lithium consumed during charging and discharging decreases, charge/discharge lifespan of the battery deteriorates. Accordingly, the thickness of the metal layer 20 is preferably 1 µm or more.

The protective layer 30 is disposed on at least one surface of the current collector 10 and may include a carbon-based material and a metal fluoride or a metal nitride. The carbon-based material may include, for example, amorphous carbon. The amorphous carbon may be, for example, one or more selected from the group consisting of acetylene black, Super P black, carbon black, Denka black, activated carbon, graphite, hard carbon, and soft carbon, but is not limited thereto. The amorphous carbon may be in a powder form.

The metal fluoride may be MₓF_{γ}. Specifically, the metal fluoride may be, for example, a material such as MgF₂ or AgF. The metal nitride may be MₓN 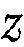 . Specifically, the metal nitride may be, for example, Mg₃N₂ or Ag₃N.

In an embodiment, the protective layer 30 may have a thickness of 0.01 µm to 50 µm. Specifically, the protective layer 30 may have a thickness of 1 µm to 20 µm. The thickness of the protective layer 30 may mean an average thickness of a region excluding an alloy layer AL. As the thickness of the protective layer 30 satisfies the above-described range, an ultra-thin lithium metal electrode can be provided.

When the thickness of the protective layer 30 is outside the upper limit of the above-described range, there is a problem in that resistance of the protective layer becomes too high, which may cause an increase in overvoltage during operation of a secondary battery, and battery energy density decreases due to increases in weight and volume. When the thickness of the protective layer 30 is outside the lower limit of the above-described range, there is a problem in that the protective layer cannot function as a protective layer.

In an embodiment, the protective layer 30 may include a binder. The binder may be an aqueous binder, and the aqueous binder may be one or more selected from the group consisting of rubber-based binders selected from acrylonitrile-butadiene rubber, styrene-butadiene rubber (SBR), and acrylic rubber, and polymer resins such as hydroxyethyl cellulose, carboxymethyl cellulose, and polyvinylidene fluoride, but is not limited thereto.

Here, the binder may be added in an amount of 1 part by weight to 15 parts by weight, and specifically 3 parts by weight to 10 parts by weight, based on 100 parts by weight of a total amount of the carbon-based material and components of the alloy layer AL. When the content of the binder satisfies the above range, particles constituting the protective layer can be effectively bound to form a protective layer having excellent performance without causing deterioration of battery energy density due to an increase in weight and volume, thereby further improving lifespan characteristics of the secondary battery.

When the content of the binder is excessively smaller than the above range, there is a problem in that binding force between particles is reduced in forming the protective layer, and when the content of the binder is excessively greater than the above range, not only does energy density decrease, but also resistance of the protective layer greatly increases, thereby hindering lithium ion conduction.

In an embodiment, the alloy layer AL including at least one of a nitrogen-based alloy and a magnesium-based alloy may be included in at least one region between the metal layer 20 and the protective layer 30 and inside the protective layer 30. The alloy layer AL including at least one of a nitrogen-based alloy and a magnesium-based alloy may be formed by a reaction between a metal fluoride or a metal nitride included in the protective layer 30 and lithium supplied during a lithium electrodeposition process. For example, when magnesium nitride (Mg₃N₂) is used as the metal nitride, a nitrogen-based alloy such as Li₃N may be formed by bonding between a nitrogen element included in the magnesium nitride and lithium ions during the electrodeposition process through reaction with lithium. In addition, when magnesium fluoride (MgF₂) is used as the metal fluoride, a magnesium-based alloy such as LiMg generated by bonding between a magnesium element included in the magnesium fluoride and lithium ions during the electrodeposition process may be formed.

As described above, the alloy layer AL including at least one of a nitrogen-based alloy and a magnesium-based alloy is formed during the lithium electrodeposition process, is advantageous for lithium ion conduction, and has excellent mechanical properties, and thus, when applied to a battery, charge/discharge performance of the battery can be improved. In addition, since a lithium electrode is manufactured through lithium electrodeposition and electrodeposition can be performed at a high current, a lithium negative electrode can be manufactured at high speed.

In an embodiment, the alloy layer AL including at least one of a nitrogen-based alloy and a magnesium-based alloy may be disposed in at least one region between the metal layer 20 and the protective layer 30 and inside the protective layer 30. As described above, since the alloy layer AL is formed by reaction between lithium ions and the metal fluoride or the metal nitride added to the protective layer during the lithium electrodeposition process, the alloy layer AL may be formed between the metal layer 20 and the protective layer 30, and may include all cases in which the alloy layer AL is disposed inside the protective layer 30, for example, in a lower region of the protective layer 30.

In an embodiment, the lithium metal electrode 100 may further include a coating layer disposed on at least a partial region of the protective layer 30. The coating layer may be formed not only by a reaction between lithium metal of the electrodeposited lithium supply source 40 and a plating solution during manufacture of the metal layer 20, but also by reaction with the metal fluoride or the metal nitride in the protective layer 30. The thickness, composition, properties, and the like of the coating layer may be controlled by controlling the composition of the plating solution used and conditions of the electrodeposition process, and may also be controlled by controlling the content of the metal fluoride or the metal nitride.

In an embodiment, the coating layer may include at least a portion of LiF. By including at least a portion of LiF, the coating layer can improve lifespan and prevent dendrite growth due to high ionic conductivity during battery operation.

The coating layer may have a thickness of 2 nm to 2 µm. Specifically, the coating layer may have a thickness of 10 nm to 500 nm. When the thickness of the coating layer is excessively large, lithium ion conductivity decreases and interfacial resistance increases, thereby deteriorating charge/discharge characteristics when applied to a battery. When the thickness of the coating layer is excessively small, the coating layer may be easily lost in the process of applying the lithium metal electrode according to the embodiment to a battery. Accordingly, the coating layer may have a small thickness within the above thickness range and may be uniformly and densely formed over the entirety of the protective layer 30.

In an embodiment, the lithium metal electrode 100 may have at least one peak value among 21° to 25°, 26° to 30°, 35° to 39°, 45° to 47°, 48° to 51°, and 54° to 56° in XRD peak values. The above-described peak values may appear as the lithium metal electrode 100 includes at least one of a nitrogen-based alloy and a magnesium-based alloy. For example, when the lithium metal electrode 100 includes a nitrogen-based alloy, the lithium metal electrode 100 may include, in XRD peak values, at least one of 21° to 25°, 26° to 30°, 45° to 47°, 48° to 51°, and 54° to 56°. When the lithium metal electrode 100 includes a magnesium-based alloy, the lithium metal electrode 100 may include, in XRD peak values, 35° to 39°. The above-described XRD peak values may appear as the lithium metal electrode 100 includes the alloy layer AL including at least one of a nitrogen-based alloy and a magnesium-based alloy between the metal layer 20 and the protective layer 30 or in an inner region of the protective layer 30.

In an embodiment, the lithium metal electrode 100 may have XRD peak values satisfying the following Equation 1. <Equation 1> $3.0 \leq second peak value / first peak value \times 100 \left(%\right) \leq 10.0$

In Equation 1, the first peak value is an intensity value at 44° to 46°, and the second peak value is an intensity value at 26° to 30°.

Equation 1 may be an index for whether a nitrogen-based alloy is formed. Equation 1 may satisfy 3 to 10, and more specifically 5 to 8. As Equation 1 satisfies the above-described range, an appropriate amount of the nitrogen-based alloy is generated, which is advantageous for lithium ion conduction.

When Equation 1 exceeds the upper limit of the above-described range, there is a problem in that the nitrogen-based alloy is excessively generated and mechanical strength of the alloy layer AL decreases. When Equation 1 is below the lower limit of the above-described range, there is a problem in that generation of the nitrogen-based alloy is insufficient and lithium ion conductivity is low.

In an embodiment, the lithium metal electrode 100 may have XRD peak values satisfying the following Equation 2. <Equation 2> $3 \leq third peak value / first peak value \times 100 \left(%\right) \leq 10$

In Equation 2, the first peak value is an intensity value at 44° to 46°, and the third peak value is an intensity value at 35° to 39°.

Equation 2 may be an index for whether a magnesium-based alloy is formed. Equation 2 may satisfy 3 to 10, and more specifically 5 to 8. As Equation 2 satisfies the above-described range, an appropriate amount of the magnesium-based alloy is generated and easily bonds with lithium ions during charging and discharging, thereby improving conduction of lithium ions.

When Equation 2 exceeds the upper limit of the above-described range, as an excessive amount of the magnesium-based alloy is generated, the retained amount of lithium capable of replenishing lithium consumed during charging and discharging decreases, and thus charge/discharge lifespan of the battery deteriorates. When Equation 2 is below the lower limit of the above-described range, the amount of the magnesium-based alloy is insufficient, thereby causing a problem in that the effect of improving lithium ion conductivity decreases.

In an embodiment, the lithium metal electrode 100 may have XRD peak values satisfying the following Equation 3. <Equation 3> $3 \leq \left(second peak value+third peak value\right) / first peak value \times 100 \left(%\right) \leq 20$

In Equation 3, the first peak value is an intensity value at 44° to 46°, the second peak value is an intensity value at 26° to 30°, and the third peak value is an intensity value at 35° to 39°.

Equation 3 may be an index for whether the nitrogen-based and magnesium-based alloys are formed. Equation 3 may satisfy 3 to 20, and more specifically 8 to 12. As Equation 3 satisfies the above-described range, there is an advantage in lithium ion conduction and mechanical strength.

When Equation 3 exceeds the upper limit of the above-described range, there is a problem in that mechanical strength decreases or charge/discharge lifespan deteriorates. When Equation 3 is below the lower limit of the above-described range, there is a problem of low lithium ion conductivity.

Referring to FIG. 1B, in an embodiment, the lithium metal electrode 100 includes the current collector 10, a metal layer 20' positioned on at least one surface of the current collector 10 and configured by mixing lithium and a lithium alloy, and the protective layer 30 disposed on the metal layer 20'. Here, the lithium alloy may be formed by alloying a lithiophilic component included in the metal layer 20' formed on the current collector 10 and lithium precipitated from the lithium supply source 40 by applying a current between the current collector 10 and the lithium supply source 40.

The metal layer 20' may include a lithiophilic metal. In an embodiment, the metal layer 20' includes a lithiophilic metal. When the metal layer 20' including a lithiophilic metal is formed as described above, free energy of nucleation can be lowered in an early stage of nucleation of lithium particles in the electrodeposition process, and thus a lithium metal layer having a coarse particle structure can be formed even under high-current and overvoltage conditions.

In an embodiment, the alloy layer AL including at least one of a nitrogen-based alloy and a magnesium-based alloy may be included in at least one region between the metal layer 20' and the protective layer 30 and inside the protective layer 30. A detailed description thereof may refer to FIG. 1A.

In an embodiment, the metal layer 20' includes the protective layer 30 positioned on a surface of the metal layer 20', and may include a coating layer inside and/or on a surface of the protective layer 30. Detailed descriptions of the protective layer 30 and the coating layer may refer to the description provided above with reference to FIG. 1A.

FIG. 2 is a schematic view of a method for manufacturing the lithium metal electrode 100 of the present invention.

Referring to FIG. 2, a method for manufacturing a lithium metal electrode 100 according to an embodiment includes preparing a current collector 10, forming a coating layer 20 on at least one surface of the current collector 10 using a coating composition including a lithiophilic component, and forming a protective layer 30 by coating a slurry on a surface of the coating layer.

In the step of preparing the current collector 10, as the current collector 10, a material having electrical conductivity and having limited reactivity with lithium may be used. Specifically, the material of the current collector 10 may be, for example, one of copper, nickel, titanium, stainless steel, gold, platinum, silver, tantalum, ruthenium, and alloys thereof, carbon, a conductive polymer, and a composite fiber in which a conductive layer is coated on a non-conductive polymer, or a combination thereof.

In an embodiment, the step of forming the coating layer 20 may be performed using at least one method of electroplating, electroless plating, sputtering, electron beam deposition, and thermal vapor deposition. For example, the step of forming the coating layer 20 may be performed by an electroless plating method.

The protective layer 30 may be formed on a surface of the coating layer 20 using a slurry including amorphous carbon. The protective layer 30 may be formed by applying a slurry formed by mixing the amorphous carbon and a binder in water using at least one method among a doctor blade method, a dip method, a reverse roll method, a direct roll method, a gravure method, an extrusion method, and a brush coating method. The protective layer 30 may further include a binder.

In an embodiment, the slurry may include amorphous carbon and at least one of a metal fluoride and a metal nitride. The metal fluoride may be MₓF_{γ}. Specifically, the metal fluoride may be, for example, a material such as MgF₂ or AgF. The metal nitride may be MₓN 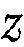 . Specifically, the metal nitride may be, for example, Mg₃N₂ or Ag₃N. By including, in the slurry, not only amorphous carbon but also a metal material including at least one of the metal fluoride and the metal nitride, the protective layer 30 advantageous for lithium ion conduction, advantageous in mechanical properties, and capable of preventing growth of dendrites can be formed. In addition, by including the metal material including at least one of the metal fluoride and the metal nitride, an alloy layer including at least one of a nitrogen-based alloy and a magnesium-based alloy is formed in a subsequent lithium electrodeposition process, thereby improving performance of the battery.

In an embodiment, the slurry may include, based on 100 wt% of a total amount of amorphous carbon and a metal material including a metal fluoride or a metal nitride, the amorphous carbon in an amount of 70 wt% to 95 wt%. Specifically, the content of the amorphous carbon may be 70 wt% to 92 wt%, and more specifically 75 wt% to 85 wt%. As the content of the amorphous carbon in the slurry is included within the above-described range, there are advantages in that a maximum current density during lithium electrodeposition is improved to increase electrodeposition efficiency, and the number of charge/discharge performance cycles of the battery increases to improve lifespan characteristics.

In an embodiment, when the slurry simultaneously includes amorphous carbon, a metal fluoride, and a metal nitride, based on 100 wt% of a total amount of the amorphous carbon, the metal fluoride, and the metal nitride, a total amount of the metal fluoride and the nitride may be 8 wt% to 30 wt%.

When the content of the amorphous carbon is excessively high, the content of the metal material including the metal fluoride or the metal nitride becomes excessively low, and thus the amount of the magnesium-based alloy or nitrogen-based alloy generated is insufficient, thereby hindering improvement in lithium ion conductivity. When the content of the amorphous carbon is excessively low, the content of the metal material including the metal fluoride or the metal nitride becomes excessively high, and thus the amount of the magnesium-based alloy or nitrogen-based alloy generated is excessive, whereby the retained amount of lithium capable of replenishing lithium consumed during charging and discharging decreases, and charge/discharge lifespan of the battery deteriorates or mechanical strength decreases.

The protective layer 30 may be formed on a surface of the current collector 10 using a slurry including the carbon-based material and a metal material including at least one of the metal fluoride and the metal nitride. The protective layer 30 may be formed by applying a slurry formed by mixing the amorphous carbon and a binder in water using at least one method among a doctor blade method, a dip method, a reverse roll method, a direct roll method, a gravure method, an extrusion method, and a brush coating method. The protective layer 30 may further include a binder. Detailed descriptions of the carbon-based material and the metal material may refer to FIG. 1A described above.

In an embodiment, in the step of forming the protective layer 30, the slurry may be coated to a range of 3 µm to 10 µm. Specifically, the slurry may be coated to a range of 4 µm to 7 µm. As the slurry is coated within the above-described range, the protective layer 30 has an appropriate thickness, thereby not only serving as a protective layer, but also preventing lithium dendrites from being formed on a surface of the protective layer due to an effect of having appropriate resistance for movement of lithium ions, and allowing lithium ions to pass through and be conducted well inside the protective layer 30, whereby lithium can be precipitated on a lower surface of the protective layer.

When the thickness of the protective layer is excessively small, there is a problem in that the protective layer cannot function as a protective layer. When the thickness of the protective layer is excessively large, there are problems in that resistance of the protective layer becomes too high, which may cause an increase in overvoltage during operation of a secondary battery, and battery energy density decreases due to increases in weight and volume. However, the thickness of the protective layer may be variably adjusted according to design of the secondary battery structure.

In an embodiment, the slurry may further include a binder. The binder may be added in an amount of 1 part by weight to 15 parts by weight, and specifically 3 parts by weight to 10 parts by weight, based on 100 parts by weight of a total amount of the amorphous carbon and the metal material. When the content of the binder satisfies the above range, particles constituting the protective layer can be effectively bound to form a protective layer having excellent performance without causing deterioration of battery energy density due to an increase in weight and volume, thereby further improving lifespan characteristics of the secondary battery.

When the content of the binder is excessively smaller than the above range, there is a problem in that binding force between particles is reduced in forming the protective layer, and when the content of the binder is excessively greater than the above range, not only does energy density decrease, but also resistance of the protective layer greatly increases, thereby hindering lithium ion conduction.

In an embodiment, after forming the protective layer 30, the method for manufacturing a lithium metal electrode includes placing the current collector 10 on which the protective layer 30 is formed in a plating solution 50 and then placing a lithium supply source 40 at a predetermined distance from the protective layer 30, and applying a current between the current collector and the lithium supply source 40 to form a metal layer including a lithium alloy in which the lithiophilic component included in the coating layer and lithium precipitated from the lithium supply source 40 are alloyed.

After the step of forming the protective layer 30, a step of placing the current collector 10 on which the protective layer 30 is formed in the plating solution 50 and then placing the lithium supply source 40 at a predetermined distance from the current collector 10, and a step of applying a current between the current collector 10 and the lithium supply source 40 to form the metal layer 20 are performed.

Specifically, after the current collector 10 on which the protective layer 30 is formed is placed in the plating solution, the lithium supply source 40 is placed at a predetermined distance from the protective layer 30. The lithium supply source 40 may be, for example, lithium metal, a lithium alloy, a foil in which the lithium metal or lithium alloy is pressed onto a current collector, a plating solution in which a lithium salt is dissolved, or the like.

The plating solution 50 may be prepared by dissolving a lithium salt in a plurality of solvents. Specifically, the lithium salt may be LiCl, LiBr, LiI, LiCO₃, LiNO₃, LiFSI, LiTFSI, LiBF₄, LiPF₆, LiAsF₆, LiClO₄, LiN(SO₂CF₃)₂, LiBOB, or a combination thereof. The concentration of the lithium salt may be 1.0 M to 3.0 M based on the entire electrolyte solution.

Specifically, in the present embodiment, the plating solution 50 is characterized by including a nitrogen-based compound as at least one of the lithium salt and the plurality of solvents. The nitrogen-based compound may include, for example, one or more selected from the group consisting of lithium nitrate, lithium bis(fluorosulfonyl)imide, lithium bis(trifluoromethane sulfonimide), ε-caprolactam, N-methyl-ε-caprolactam, triethylamine, and tributylamine.

Among the nitrogen-based compounds, at least one of lithium nitrate, lithium bis(fluorosulfonyl)imide, and lithium bis(trifluoromethane sulfonimide) may be used as a lithium salt.

Among the nitrogen-based compounds, at least one of ε-caprolactam, N-methyl-ε-caprolactam, triethylamine, and tributylamine may be used as a non-aqueous solvent.

The plating solution 50 may be prepared using only the nitrogen-based compound, but may include a general non-aqueous solvent as an auxiliary solvent in consideration of viscosity and the like of the plating solution 50.

The auxiliary solvent may include, for example, one or more selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane, and 1,3,5-trioxane.

In an embodiment, the auxiliary solvent may be included in an amount of 5 wt% to 70 wt%, preferably 10 wt% to 60 wt%, based on 100 wt% of the entire plating solution 50, but is not limited thereto. However, when the auxiliary solvent is included within the above range, the viscosity of the plating solution 50 is appropriate, and thus electrodeposition time can be shortened, but the present invention is not limited thereto.

In an embodiment, the plating solution 50 may further include a fluorine-based compound. When the plating solution 50 further includes the fluorine-based compound, there is an advantage in that properties of a coating layer on the metal layer or the protective layer can be improved.

The fluorine-based compound may include, for example, one or more selected from the group consisting of lithium difluorophosphate, lithium hexafluorophosphate, lithium difluoro bisoxalato phosphate, lithium tetrafluoro oxalato phosphate, lithium difluoro oxalate borate, lithium difluoro oxalato borate, lithium tetrafluoro oxalato borate, fluoroethylene carbonate, difluoroethylene carbonate, and 1,1,2,2-tetrafluoroethyl 2,2,3,3-tetrafluoropropyl ether.

The fluorine-based compound may be included in an amount of 0.1 wt% to 30 wt%, preferably 1 wt% to 20 wt%, and more preferably 1 wt% to 10 wt%, based on 100 wt% of the entire plating solution 50. When the fluorine-based compound is included within the above range, the nitrogen-based compound and the fluorine-based compound in the plating solution 50 smoothly interact with each other, and thus there is an advantage in that the effect of improving properties of the coating layer is excellent. In addition, excessive generation of LiF by direct reaction between the fluorine-based compound and lithium is suppressed, which is advantageous in that electrochemical properties are excellent.

Next, after an insulating film is positioned between the current collector 10 and the lithium supply source 40, the current collector 10, the lithium supply source 40, and the insulating film may be stacked and constrained in both directions using a constraining device. As non-limiting examples of the constraining device, a method generally used in the art, such as a manual clamping method or a uniaxial pressing method using hydraulic pressure or pneumatic pressure, may be used.

In the step of applying a current to form a metal layer including lithium on at least one surface of the current collector, the current density of the applied current may be in a range of 0.1 mA/cm² to 100 mA/cm², more specifically 0.2 mA/cm² to 50 mA/cm², 5 mA/cm² to 30 mA/cm², or 7 mA/cm² to 25 mA/cm².

In an embodiment, the time for applying the current may be in a range of 0.05 hours to 50 hours, and more specifically 0.25 hours to 25 hours.

In an embodiment, the step of applying the current to form a lithium metal layer on at least one surface of the current collector may be performed at least once at different current densities. The step of applying the current may be performed in multiple stages. Specifically, the step of applying the current in multiple stages may be performed by increasing the current density stepwise from a low current density to a high current density for predetermined times. For example, the step of applying the current may be performed by electrodeposition while increasing stepwise in the order of 0.1 mA/cm² to 0.3 mA/cm², 0.3 mA/cm² to 0.7 mA/cm², and 0.8 mA/cm² to 1.5 mA/cm².

In an embodiment, the step of applying the current to form the metal layer 20 on at least one surface of the current collector 10 may include electrodepositing at a maximum current density in a range of 6 mA/cm² to 12 mA/cm². Specifically, the maximum current density may be in a range of 8 mA/cm² to 12 mA/cm². The maximum current density means a limit of current density at which lithium electrodeposited in the electrodeposition process can be precipitated between the protective layer 30 and the current collector 10.

The step of electrodepositing at the maximum current density may be, for example, a step finally performed after a step of precipitating in multiple stages in order to precipitate lithium between the current collector 10 and the protective layer 30. When the maximum current density satisfies the above range, lithium is appropriately precipitated between the current collector 10 and the protective layer 30, and there are advantages in that lifespan characteristics of the battery and bonding strength between the current collector 10 and the protective layer 30 are excellent.

When the maximum current density is outside the upper limit of the above-described range, since lithium is precipitated on the surface of the protective layer 30, there is a problem in that a targeted stabilized electrode structure cannot be secured. When the maximum current density is outside the lower limit of the above-described range, there is a problem of reduced productivity because the time for electrodepositing lithium increases.

In an embodiment, in the step of applying the current to form a lithium metal layer on at least one surface of the current collector, precipitated lithium may be electrodeposited to a thickness in a range of 5 µm to 15 µm. Specifically, the precipitated lithium may be electrodeposited to a thickness in a range of 8 µm to 12 µm. The thickness of the precipitated lithium may mean a height in a vertical direction of lithium disposed between the current collector 10 and the protective layer 30.

When the thickness of the precipitated lithium is outside the upper limit of the above thickness range, not only does energy density of the battery decrease, but also process time and the amount of metal raw materials used increase when forming the metal layer. When the thickness of the precipitated lithium is outside the lower limit of the above thickness range, there is a problem in that initial Coulombic efficiency is reduced due to initial irreversibility and charge/discharge performance deteriorates because surplus lithium is insufficient.

A lithium secondary battery according to still another embodiment of the present invention includes a positive electrode, a negative electrode, and an electrolyte positioned between the positive electrode and the negative electrode. Here, the negative electrode may be the lithium metal electrode according to the present invention.

In an embodiment, the lithium secondary battery may include an electrode assembly including a positive electrode including a positive electrode active material, a negative electrode which is the lithium metal electrode of the present invention, and a separator disposed between the positive electrode and the negative electrode. The electrode assembly may be wound or folded and accommodated in a battery case.

Thereafter, an electrolyte may be injected into the battery case and sealed to complete a secondary battery. At this time, the battery case may have a cylindrical, prismatic, pouch, coin, or other shape.

The positive electrode may include a positive electrode active material layer and a positive electrode current collector. The positive electrode active material layer may include, for example, a Li compound including at least one metal among Ni, Co, Mn, Al, Cr, Fe, Mg, Sr, V, La, and Ce, and at least one non-metal element selected from the group consisting of O, F, S, P, and combinations thereof.

In an embodiment, a conductive material may be further added to the positive electrode active material layer. The conductive material may be, for example, carbon black, ultrafine graphite particles, fine carbon such as acetylene black, a nano metal particle paste, or the like, but is not limited thereto.

The positive electrode current collector serves to support the positive electrode active material layer. As the positive electrode current collector, for example, an aluminum foil, a nickel foil, or a combination thereof may be used, but is not limited thereto.

As the electrolyte filled in the lithium secondary battery, a non-aqueous electrolyte solution, a solid electrolyte, or the like may be used. Specifically, the electrolyte may be a solid electrolyte. The non-aqueous electrolyte solution may include, for example, a lithium salt such as lithium hexafluorophosphate or lithium perchlorate, and a solvent such as ethylene carbonate, propylene carbonate, or butylene carbonate. In addition, as the solid electrolyte, for example, a gel polymer electrolyte in which an electrolyte solution is impregnated in a polymer electrolyte such as polyethylene oxide or polyacrylonitrile, or an inorganic solid electrolyte such as LiI or Li₃N may be used.

The separator separates the positive electrode and the negative electrode and provides a movement path for lithium ions, and any separator commonly used in lithium secondary batteries may be used. Specifically, the separator may have low resistance to ion movement of the electrolyte and excellent electrolyte solution impregnation ability. The separator may be, for example, selected from glass fibers, polyester, polyethylene, polypropylene, polytetrafluoroethylene, or combinations thereof, and may be in the form of a nonwoven fabric or a woven fabric. Meanwhile, when a solid electrolyte is used as the electrolyte, the solid electrolyte may also serve as the separator.

Hereinafter, embodiments of the present invention will be described in detail. However, these are provided as examples, and the present invention is not limited thereto, and the present invention is only defined by the scope of the claims to be described below.

### <Experimental Example>

### Preparation of Negative Electrode for Lithium Secondary Battery

### <Example 1>

### <Preparation of Current Collector>

A nickel (Ni) current collector was prepared for use in a negative electrode for a lithium secondary battery of the present invention.

### <Formation of Coating Layer>

An alloy material was coated on both surfaces of the nickel (Ni) current collector by an electroplating method. At this time, silver (Ag) was used as the alloy material, and the plating thickness was about 100 nm.

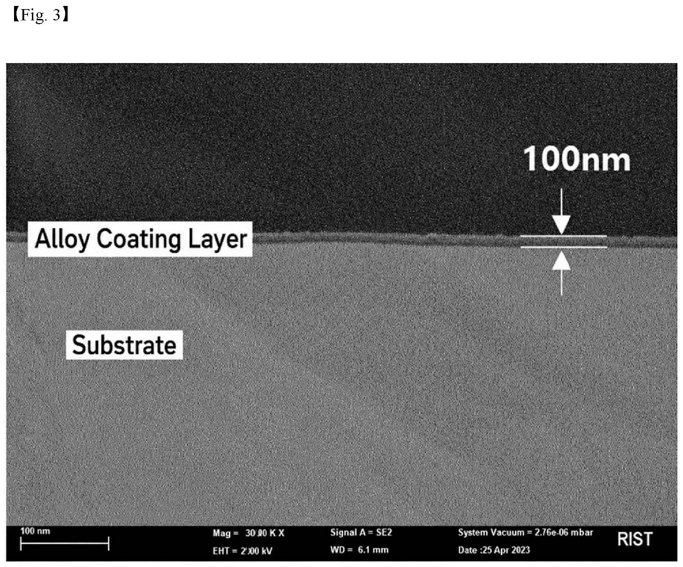

FIG. 3 shows a structure photograph in which a coating layer is applied onto a current collector according to an embodiment of the present invention.

Referring to FIG. 3, it can be confirmed that a coating layer using silver was applied onto the current collector. It can be confirmed that the thickness of the coating layer was about 100 nm.

### <Formation of Protective Layer>

A protective layer having a thickness of about 5 µm was formed on the upper surface of the coating layer by slurry coating using a comma coater. Specifically, a slurry was prepared to form the protective layer, and the slurry was prepared by mixing amorphous carbon and a metal nitride, and further mixing a binder and a solvent. At this time, acetylene black was used as the amorphous carbon, and magnesium nitride (Mg₃N₂) was used as the metal nitride. The respective weight ratio was amorphous carbon:metal nitride = 90:10.

In addition, as the mixed binder, carboxymethyl cellulose (CMC) and styrene-butadiene rubber (SBR) were added in amounts of 3 parts by weight and 6 parts by weight, respectively, based on the total amount of the amorphous carbon and the metal nitride. In addition, as a solvent, water and ethylene glycol (EG) were used such that a weight ratio thereof was 80:20. The total amount of the solvent was about 25 wt% based on the total amount of the amorphous carbon, metal particles, and binder to maintain a viscosity suitable for coating.

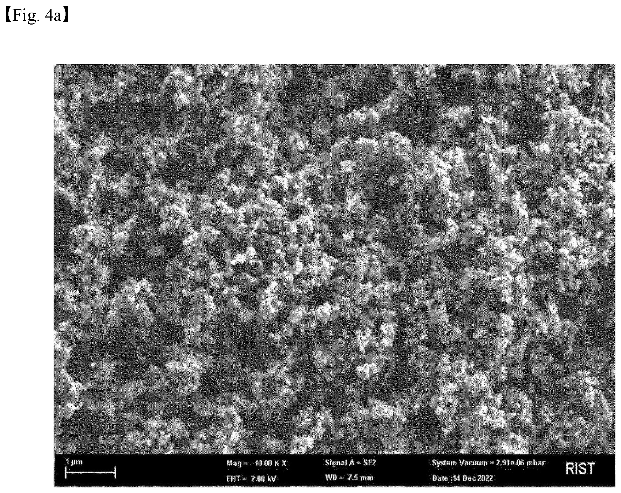

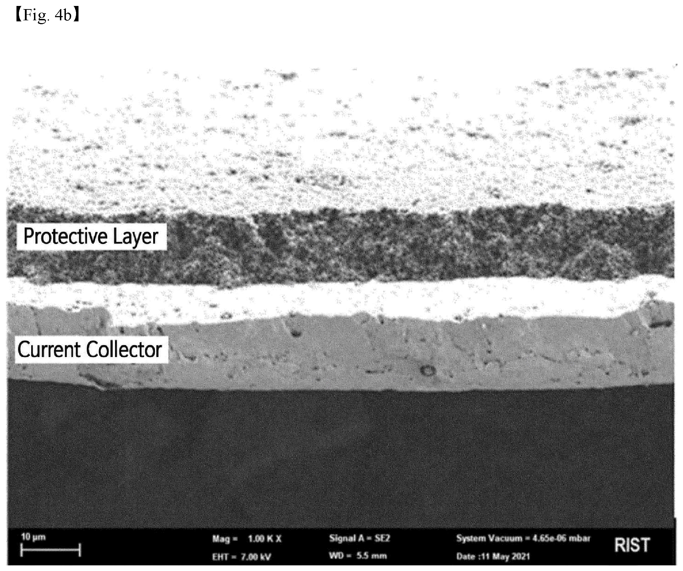

FIGS. 4A and 4B show surface and cross-sectional microstructures when the protective layer is disposed on the current collector.

Referring to FIGS. 4A and 4B, after the solvent was volatilized, the protective layer had a porous surface structure and cross-sectional form, and such a porous structure allows a plating solution to be smoothly impregnated in a subsequent lithium electrodeposition process, thereby facilitating movement and electrodeposition of lithium ions.

### <Lithium Electrodeposition Process>

Thereafter, in order to form a lithium alloy or pure lithium metal between the protective layer and the current collector, an electrodeposition process was used to remove lithium from a lithium supply source and precipitate the lithium between the protective layer and the current collector. The plating solution used for such electrodeposition was prepared by adding, to a 1,2-dimethoxyethane solvent, lithium bis(fluorosulfonyl)imide and lithium nitrate, which are nitrogen-based compounds, in amounts of 40 wt% and 5 wt%, respectively, based on 100 wt% of the plating solution, and adding fluoroethylene carbonate, which is a fluorine-based compound, in an amount of 5 wt% based on 100 wt% of the plating solution.

As the lithium supply source, a lithium metal plate having a purity of 99.9% or more and a thickness of 500 µm was pressed onto a copper current collector plate (Cu plate) and used. After the lithium supply source and the current collector were stacked in the plating solution in an electrically insulated state, a current was applied using a power supply in a manner in which the lithium supply source and the current collector were used as (+) and (-) electrodes, respectively, to precipitate lithium between the current collector and the composite protective layer.

The current density of the electrodeposition process was increased stepwise in the order of 0.2 mA/cm², 0.5 mA/cm², and 1 mA/cm², electrodeposition was performed for 5 minutes at each current density, and then the maximum current density was set to 10 mA/cm². The electrodeposition time at the maximum current density was variably set according to the magnitude of the maximum current density by calculating a time at which a final cumulative lithium thickness of 10 µm could be electrodeposited.

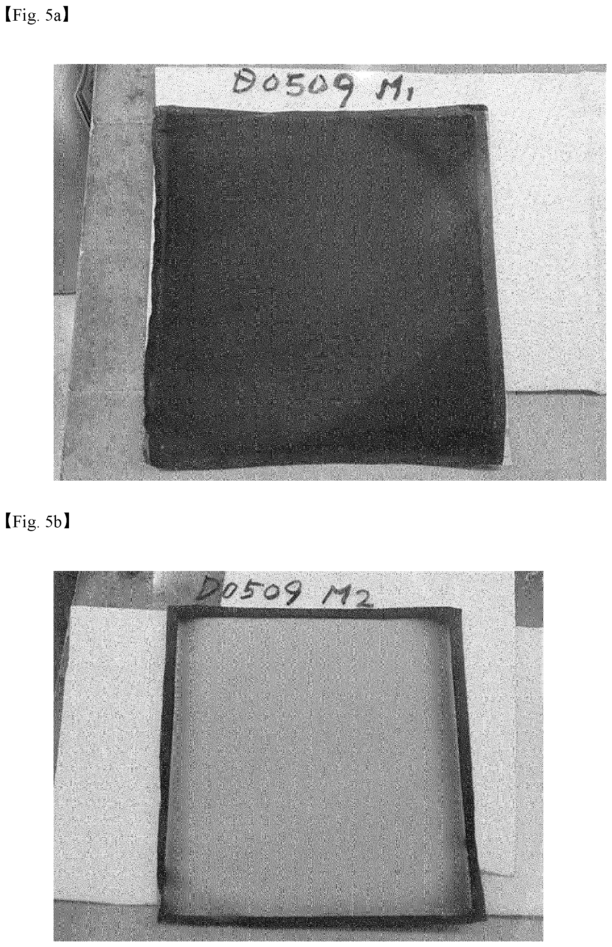

FIGS. 5A and 5B show electrodeposition appearances according to a maximum current density in electrodeposition processes according to an Example and a Comparative Example.

FIG. 5A shows an electrodeposition appearance when electrodeposition was performed at or below the maximum current density, and FIG. 5B shows an electrodeposition appearance when electrodeposition was performed above the maximum current density. Referring to FIGS. 5A and 5B, it can be confirmed that, when electrodeposition is performed at or below the maximum electrodepositable current density, precipitated lithium is stacked under the black protective layer, and thus the black protective layer is observed in appearance, and that, when electrodeposition is performed above the maximum electrodepositable current density, lithium is stacked on an upper surface of the protective layer, and grayish lithium is electrodeposited on the upper surface of the protective layer. Through this, the maximum current density was defined as the maximum electrodepositable current density at which lithium is precipitated between the current collector and the protective layer in the electrodeposition process.

### Manufacture of All-Solid-State Battery

An all-solid-state battery was manufactured by applying the negative electrode manufactured according to the above-described Example, and charge/discharge lifespan was evaluated. For evaluation of the all-solid-state battery cell, a pressurized dedicated evaluation cell manufactured by Terra Leader, capable of maintaining an inert atmosphere, was used. For manufacture of the all-solid-state battery cell, a sulfide-based argyrodite (Li₆PS₅Cl) solid electrolyte was used as an electrolyte, and the electrolyte was formed into a pellet having a thickness of about 0.7 mm. In order to secure a dense electrolyte, pressure was applied at 370 MPa.

Lithium having a thickness of 0.5 mm was attached to one surface of the electrolyte as a reference electrode, and the negative electrodes manufactured according to the Examples and Comparative Examples were attached to the opposite surface. The reference electrode and the evaluation electrode were attached to the solid electrolyte at a pressure of 50 MPa, and pressure was applied at 16 MPa in the dedicated evaluation cell during charge/discharge evaluation.

### <Example 2>

The same procedure as in Example 1 was performed, except that, in order to prepare the slurry used for forming the protective layer, amorphous carbon and magnesium fluoride (MgF₂) were mixed at a weight ratio of 90:10.

### <Example 3>

The same procedure as in Example 1 was performed, except that, in order to prepare the slurry used for forming the protective layer, amorphous carbon, magnesium nitride (Mg₃N₂), and magnesium fluoride (MgF₂) were mixed at a weight ratio of 80:10:10.

### <Comparative Example 1>

The same procedure as in Example 1 was performed, except that, in order to prepare the slurry used for forming the protective layer, a metal fluoride or a metal nitride was not used, and only amorphous carbon was mixed at a weight ratio of 100.

### <Evaluation Example>: Evaluation According to Addition of Metal Fluoride or Metal Nitride

Table 1 below shows XRD peak values after electrodeposition, maximum current density, and the number of charge/discharge performance cycles according to contents of amorphous carbon, magnesium nitride, or magnesium fluoride in the protective layer-forming slurry when forming the protective layer. The XRD peak values, maximum current, and number of charge/discharge performance cycles were measured by the following methods.

XRD peak values: After the step of forming the protective layer and additionally precipitating lithium between the protective layer and the current collector through an electrodeposition process, phase analysis of a sample was performed through XRD analysis evaluation by Rigaku. The XRD analysis was performed in a thin-film mode, and in order to prevent the electrodeposited sample from reacting with external air or moisture, the specimen was sealed with Kapton tape and measured. Accordingly, a broad gentle peak appearing in a wide range at a low angle of the sample may be a peak caused by the Kapton tape.

Maximum current density (mA/cm²): The maximum current density means a limit of current density at which lithium electrodeposited according to the above process can be precipitated between the protective layer and the current collector, and the maximum current density was measured.

Number of charge/discharge performance cycles (cycles): The reference electrode and the evaluation electrode were attached to the solid electrolyte at a pressure of 50 MPa, and pressure was applied at 16 MPa in the dedicated evaluation cell during charge/discharge evaluation. The charge/discharge evaluation was performed by defining, as one cycle, charging at a constant current of 2 mA/cm² for 0.5 hours and discharging at a constant current of 2 mA/cm² for 0.5 hours. The charge/discharge lifespan was defined as ending when a short circuit occurred between the reference electrode and the evaluation electrode during charging and discharging or when a voltage between the two electrodes exceeded 2 V.

**[Table 1]**

| Classificat ion | Protective Layer Composition | | | XRD Peak Value After Electrodeposition | | | Evaluation | |
|---|---|---|---|---|---|---|---|---|
| | Amorphous Carbon [wt%] | Magnesium Nitride (Mg₃N₂)[wt%] | Magnesium Fluoride(MgF₂) [wt%] | Equation 1^{*} | Equation 2^{**} | Equation 3^{***} | Maximum Current Density [mA/cm²] | Number of Charge/Discharge Performance Cycles (cycles) |
| Example 1 | 90 | 10 | - | 6.5 | 0.1 | 6.6 | 10 | 826 |
| Example 2 | 90 | - | 10 | 0.1 | 5.9 | 5.9 | 10 | 912 |
| Example 3 | 80 | 10 | 10 | 6.2 | 4.0 | 10.2 | 12 | 934 |
| Comparati ve Example 1 | 100 | - | - | 0.1 | 0.1 | 0.2 | 4 | 481 |
| * Equation 1: second peak / first peak × 100 (%) | | | | | | | | |
| In Equation 1, the first peak value is the first peak value of Ni, and the second peak value is the second peak value of Li₃N. Specifically, the first peak value is an intensity value at 44° to 46°, and the second peak value is an intensity value at 26° to 30°. | | | | | | | | |
| ** Equation 2: third peak / first peak × 100 (%) | | | | | | | | |
| In Equation 1, the first peak value is the first peak value of Ni, and the third peak value is a peak value of a Li-Mg alloy phase. Specifically, the first peak value is an intensity value at 44° to 46°, and the third peak value is an intensity value at 35° to 39°. | | | | | | | | |
| *** Equation 3: (second peak + third peak) / first peak × 100 (%) | | | | | | | | |

Referring to Table 1, when Examples 1 and 2 are compared with Comparative Example 1, it was confirmed that the maximum current density and number of charge/discharge performance cycles of Example 1 or Example 2 including magnesium nitride or magnesium fluoride were superior to Comparative Example 1 including only amorphous carbon as the composition of the protective layer. Referring to Examples 1 to 3, it was confirmed that Example 3 simultaneously including magnesium nitride and magnesium fluoride was superior in maximum current density and number of charge/discharge performance cycles compared with Examples 1 and 2 including only one of magnesium nitride and magnesium fluoride.

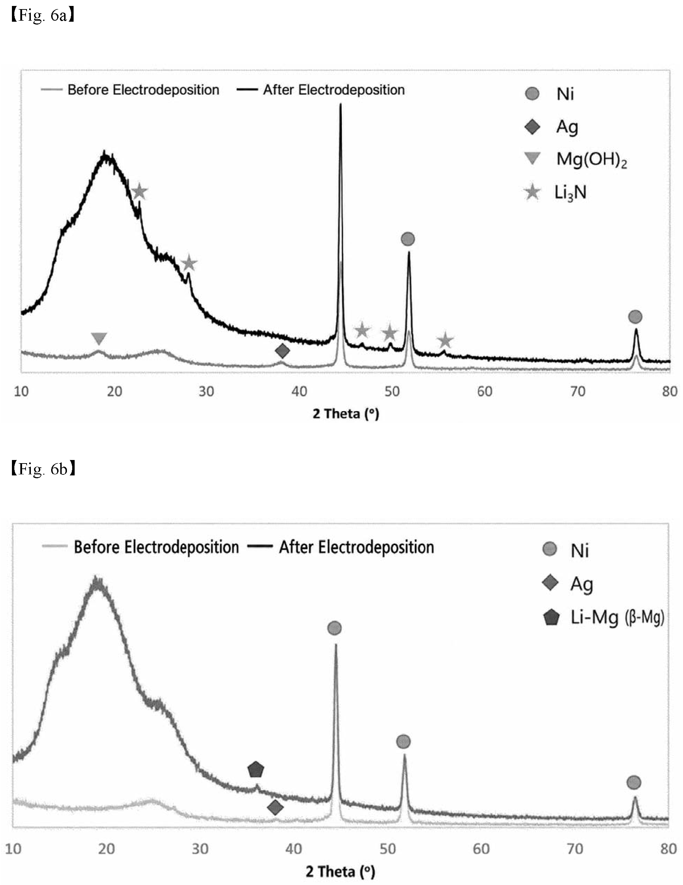

FIGS. 6A to 6D show XRD phase analysis results before and after lithium electrodeposition of protective layers according to Examples and Comparative Examples of the present invention.

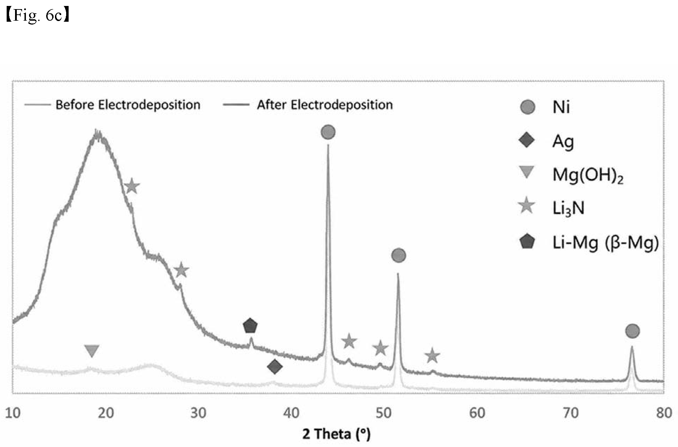

FIG. 6A shows XRD phase analysis results before and after lithium electrodeposition of the protective layer according to Example 1, FIG. 6B according to Example 2, FIG. 6C according to Example 3, and FIG. 6D according to Comparative Example 1.

Referring to FIG. 6A, as a result of performing XRD phase analysis in a state in which the protective layer including magnesium nitride (Mg₃N₂) was coated on the current collector, it was confirmed that phases of materials such as nickel, which is the current collector, and silver (Ag) plated for alloying with lithium were observed. In addition, it was confirmed that a Mg(OH)₂ peak was observed near about 18°, which is a form generated by decomposition of the Mg₃N₂ nitride during a slurry manufacturing process including water.

Thereafter, after lithium was precipitated and electrodeposited between the protective layer and the current collector through an electrodeposition process, it was confirmed that a Li₃N phase was observed in the sample. It is confirmed that this was generated by bonding between a nitrogen element included in the magnesium nitride and lithium ions during the electrodeposition process.

Referring to FIG. 6B, as a result of performing XRD phase analysis in a state in which the protective layer including magnesium fluoride (MgF₂) was coated on the current collector, it was confirmed that phases such as nickel, which is the current collector, and silver (Ag) plated for alloying with lithium were observed. In the sample after electrodeposition in which lithium was precipitated between the protective layer and the current collector through an electrodeposition process, it was confirmed that a Li-Mg alloy phase was observed near 36°. It is confirmed that this was generated by bonding between a magnesium element included in the magnesium fluoride and lithium ions during the electrodeposition process.

Referring to FIG. 6C, as a result of performing XRD phase analysis in a state in which a protective coating including both magnesium nitride (Mg₃N₂) and magnesium fluoride (MgF₂) was formed on the current collector, phases such as nickel, which is the current collector, and silver (Ag) plated for alloying with lithium were observed. After lithium was precipitated between the protective layer and the current collector through an electrodeposition process, it was confirmed that both a Li₃N phase and a Li-Mg alloy phase were observed in the sample.

Referring to FIG. 6D, as a result of performing XRD phase analysis in a state in which a protective coating was formed on the current collector using a slurry composed only of amorphous carbon, it was confirmed that phases such as nickel, which is the current collector, and silver (Ag) plated for alloying with lithium were observed. Thereafter, in the sample after electrodeposition, it was confirmed that no particular phase was observed other than the nickel current collector.

### <Evaluation Example 2>: Evaluation According to Control of Contents of Metal Nitride and Magnesium Metal

### <Example 4>

The same procedure as in Example 1 was performed, except that, in order to prepare the slurry used for forming the protective layer, amorphous carbon, magnesium nitride (Mg₃N₂), and magnesium fluoride (MgF₂) were mixed at a weight ratio of 92:4:4.

### <Example 5>

The same procedure as in Example 1 was performed, except that, in order to prepare the slurry used for forming the protective layer, amorphous carbon, magnesium nitride (Mg₃N₂), and magnesium fluoride (MgF₂) were mixed at a weight ratio of 70:15:15.

### <Comparative Example 2>

The same procedure as in Example 1 was performed, except that, in order to prepare the slurry used for forming the protective layer, amorphous carbon, magnesium nitride (Mg₃N₂), and magnesium fluoride (MgF₂) were mixed at a weight ratio of 96:2:2.

### <Comparative Example 3>

The same procedure as in Example 1 was performed, except that, in order to prepare the slurry used for forming the protective layer, amorphous carbon, magnesium nitride (Mg₃N₂), and magnesium fluoride (MgF₂) were mixed at a weight ratio of 60:20:20.

Table 2 below shows XRD peak values after electrodeposition, maximum current density, and the number of charge/discharge performance cycles according to contents of amorphous carbon, magnesium nitride, and magnesium fluoride in the protective layer-forming slurry when forming the protective layer.

**[Table 2]**

| Classific ation | Protective Layer Composition | | | XRD Peak Value After Electrodeposition | | | Evaluation | |
|---|---|---|---|---|---|---|---|---|
| | Amorphous Carbon [wt%] | Magnesium Nitride (Mg₃N₂) [wt%] | Magnesium Fluoride (MgF₂) [wt%] | Equation 1^{*} | Equation 2^{**} | Equation 3^{***} | Maximum Current Density [mA/cm²] | Number of Charge/ Discharge Performance Cycles (cycles) |
| Example 3 | 80 | 10 | 10 | 6.2 | 4.0 | 10.2 | 12 | 934 |
| Example 4 | 92 | 4 | 4 | 3.8 | 3.2 | 7.0 | 10 | 872 |
| Example 5 | 70 | 15 | 15 | 9.3 | 8.8 | 18.1 | 10 | 717 |
| Compara tive Example 2 | 96 | 2 | 2 | 1.5 | 1.4 | 2.9 | 6 | 587 |
| Comparative Example 3 | 60 | 20 | 20 | 13.5 | 12.8 | 26.3 | 6 | 558 |
| * Equation 1: second peak / first peak × 100 (%) | | | | | | | | |
| In Equation 1, the first peak value is the first peak value of Ni, and the second peak value is the second peak value of Li₃N. Specifically, the first peak value is an intensity value at 44° to 46°, and the second peak value is an intensity value at 26° to 30°. | | | | | | | | |
| ** Equation 2: third peak / first peak × 100 (%) | | | | | | | | |
| In Equation 1, the first peak value is the first peak value of Ni, and the third peak value is a peak value of a Li-Mg alloy phase. Specifically, the first peak value is an intensity value at 44° to 46°, and the third peak value is an intensity value at 35° to 39°. | | | | | | | | |
| *** Equation 3: (second peak + third peak) / first peak × 100 (%) | | | | | | | | |

Referring to Table 2, when magnesium nitride and magnesium fluoride were simultaneously included in Examples 3 to 5 and Comparative Examples 2 and 3, it was confirmed that the maximum current density and number of charge/discharge performance cycles of Examples 3 to 5 including a total amount of magnesium nitride and magnesium fluoride within an appropriate range were superior to Comparative Example 2 in which the total amount of magnesium nitride and magnesium fluoride was excessively small, or Comparative Example 3 in which the total amount of magnesium nitride and magnesium fluoride was excessively large.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A lithium metal electrode comprising:
a current collector;
a metal layer positioned on at least one surface of the current collector and comprising a lithium alloy; and
a protective layer disposed on the metal layer and comprising a carbon-based material,
wherein the lithium metal electrode comprises an alloy layer comprising at least one of a nitrogen-based alloy and a magnesium-based alloy in at least one region between the metal layer and the protective layer and inside the protective layer.

2. The lithium metal electrode of claim 1,
wherein the lithium metal electrode has at least one peak value among 21° to 25°, 26° to 30°, 35° to 39°, 45° to 47°, 48° to 51°, and 54° to 56° in XRD peak values.

3. The lithium metal electrode of claim 1,
wherein XRD peak values satisfy the following Equation 1: <Equation 1> $3 \leq second peak value / first peak value \times 100 \left(%\right) \leq 10$
wherein, in Equation 1, the first peak value is an intensity value at 44° to 46°, and the second peak value is an intensity value at 26° to 30°.

4. The lithium metal electrode of claim 1,
wherein XRD peak values satisfy the following Equation 2: <Equation 2> $3 \leq third peak value / first peak value \times 100 \left(%\right) \leq 10$
wherein, in Equation 2, the first peak value is an intensity value at 44° to 46°, and the third peak value is an intensity value at 35° to 39°.

5. The lithium metal electrode of claim 1,
wherein XRD peak values satisfy the following Equation 3: <Equation 3> $3 \leq \left(second peak value+third peak value\right) / first peak value \times 100 \left(%\right) \leq 20$
wherein, in Equation 3, the first peak value is an intensity value at 44° to 46°, the second peak value is an intensity value at 26° to 30°, and the third peak value is an intensity value at 35° to 39°.

6. The lithium metal electrode of claim 1, comprising:
a coating layer disposed on the protective layer.

7. The lithium metal electrode of claim 6,
wherein the protective layer comprises a carbon-based material and a metal fluoride or a metal nitride.

8. A method for manufacturing a lithium metal electrode, comprising:
preparing a current collector;
forming a coating layer on at least one surface of the current collector using a coating composition comprising a lithiophilic component; and
forming a protective layer by coating a slurry on a surface of the coating layer,
wherein the slurry comprises a carbon-based material and at least one of a metal fluoride and a metal nitride.

9. The method for manufacturing a lithium metal electrode of claim 8, further comprising, after forming the protective layer:
placing the current collector on which the protective layer is formed in a plating solution, and then placing a lithium supply source at a predetermined distance from the protective layer; and
applying a current between the current collector and the lithium supply source to form a metal layer comprising a lithium alloy in which metal particles included in the protective layer and lithium precipitated from the lithium supply source are alloyed.

10. The method for manufacturing a lithium metal electrode of claim 8,
wherein the metal fluoride or the metal nitride comprises at least one of MgF₂, Mg₃N₂, AgF, and Ag₃N.

11. The method for manufacturing a lithium metal electrode of claim 9,
wherein, before applying the current between the current collector and the lithium supply source, the protective layer has a peak value between 16° and 18° in XRD peak values.

12. The method for manufacturing a lithium metal electrode of claim 9,
wherein, after applying the current between the current collector and the lithium supply source,
the metal layer comprises a nitrogen-based or magnesium-based alloy.

13. The method for manufacturing a lithium metal electrode of claim 9,
wherein the slurry comprises, based on 100 wt% of a total amount of amorphous carbon and a metal material comprising a metal fluoride or a metal nitride, the amorphous carbon in an amount of 70 wt% to 95 wt%.

14. The method for manufacturing a lithium metal electrode of claim 9,
wherein the slurry comprises amorphous carbon, a metal fluoride, and a metal nitride, and
wherein, based on 100 wt% of a total amount of the amorphous carbon, the metal fluoride, and the metal nitride, a total amount of the metal fluoride and the metal nitride is 8 wt% to 30 wt%.

15. The method for manufacturing a lithium metal electrode of claim 9,
wherein, in applying the current between the current collector and the lithium supply source to form the metal layer comprising the lithium alloy in which the metal particles and the lithium precipitated from the lithium supply source are alloyed,
the method comprises electrodepositing at a maximum current density in a range of 6 mA/cm² to 12 mA/cm².
